# EUROPEAN PATENT SPECIFICATION

(11) **EP 3 993 469 B1**
(45) Date of publication and mention of the grant of the patent: **11.03.2026**
(21) Application number: 21205188.2
(22) Date of filing: 28.10.2021
(51) Int. Cl.: H04W 12/03, H04W 12/04, H04L 9/40

(54) **SECURITY PROCEDURE**
SICHERHEITSVERFAHREN
PROCÉDURE DE SÉCURITÉ

(30) Priority: 29.10.2020 FI 20206074
(43) Date of publication of application: 04.05.2022
(73) Proprietor: Nokia Technologies Oy, 02610 Espoo (FI)
(72) Inventor: MAVUREDDI DHANASEKARAN, Ranganathan, 81737 Munich (DE); FRAUNHOLZ, Daniel, 81541 Munich (DE); AGGARWAL, Chaitanya, 80637 Munich (DE); BEGA, Dario, 80802 Munich (DE); JERICHOW, Anja, 85567 Grafing bei München (DE)
(74) Representative: Mudge, Kevin

(56) References cited:
- QUALCOMM INCORPORATED: "FS_ID_UAS-SA2: solutions for issues 1, 2 and 4", vol. SA WG2, no. Incheon, South Korea; 20200113 - 20200117, 7 January 2020 (2020-01-07), XP051842628, Retrieved from the Internet <URL:https://ftp.3gpp.org/tsg_sa/WG2_Arch/TSGS2_136AH_Incheon/Docs/S2-2000570.zip S2-2000570-FS_ID_UAS-SA2_RID-solution v1.doc> [retrieved on 20200107]
- "3rd Generation Partnership Project; Technical Specification Group Services and System Aspects; Study on security for 5GS enhanced support of Vertical and LAN Services; (Release 16)", 4 December 2019 (2019-12-04), XP051837773, Retrieved from the Internet <URL:https://ftp.3gpp.org/tsg_sa/TSG_SA/TSGS_86/Docs/SP-191143.zip 33819-200.doc> [retrieved on 20191204]
- "3rd Generation Partnership Project; Technical Specification Group Services and System Aspects; Study on security aspects of Unmanned Aerial Systems (UAS) (Release 17)", no. V0.2.0, 23 October 2020 (2020-10-23), pages 1 - 32, XP051961547, Retrieved from the Internet <URL:ftp://ftp.3gpp.org/Specs/archive/33_series/33.854/33854-020.zip S3-202787-33_854_0_2_0_rm.docx> [retrieved on 20201023]

## Description

### FIELD

The present disclosure relates to security of information relating to unmanned aerial vehicle type devices in a wireless communication system.

### BACKGROUND

Interworking wireless communication systems, such as cellular communication systems, with different kinds of subscriber units may require accommodation to differing needs and characteristics of the respective different kinds of subscriber units. For example, machine-type communication nodes may need extended periods of attachment with a communication system with only very occasional need of communicating short bursts of data, while telemedicine subscriber units may need a highly dependable high-resolution video link.

Unmanned aerial vehicles, UAVs, may need specific services of a communication system to support their functioning, which may involve fast velocities in the air. Preventing unauthorized access to such specific services is consequently of interest, since fast-moving devices may pose risks if they are not securely and dependably controlled.

Document "FS_IS_UAS-SA2: solutions for issues 1, 2 and 4", by QUALCOMM, 3GPP DRAFT S2-2000570, WG2, Jan. 7th, 2020, discloses using a ProSe Application Code as a UAV identifier, UAVID, and generating a remote identification information for broadcasting which entails protecting the UAVID against spoofing and confidentiality, and protecting flight information against spoofing. Document 3GPP TR33.819 v2.0.0, XP051837773 discloses e.g. using a concealed identity, SUCI, with a CAG ID to prevent man-in-the-middle attacks. Document 3GPP TR33.854 v0.2.0, XP051961547, discloses methods to deter spoofing and replay attacks, the methods comprising e.g. integrity and replay protection.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided an apparatus comprising means for performing controlling an unmanned aerial vehicle, storing at least one unmanned aerial vehicle identifier and a public key of a node, providing the at least one unmanned aerial vehicle identifier and the public key to a cryptographic process, the cryptographic process comprising generating a temporary public key, encrypting the at least one unmanned aerial vehicle identifier to obtain a ciphertext and generating a message authentication code based at least in part on the ciphertext and the public key, and transmitting the ciphertext, the message authentication code and the temporary public key in a message to the node, the at least one unmanned aerial vehicle identifier comprises at least one of an aviation authority unmanned aerial vehicle identifier or a cellular unmanned aerial vehicle identifier, and in that the means are further configured to perform generating the temporary public key in a random or pseudorandom process, and providing a timestamp to the cryptographic process which comprises encrypting the timestamp and a geo-location of the apparatus together with the at least one unmanned aerial vehicle identifier to obtain the ciphertext.

According to a second aspect of the present disclosure, there is provided an apparatus comprising means for performing storing at least one unmanned aerial vehicle identifier of a node and a private key, receiving, from a the node, a message comprising a ciphertext, a message authentication code and a temporary public key, the node being an unmanned aerial vehicle or an apparatus configured to control an unmanned aerial vehicle, and providing the ciphertext and the temporary public key to a cryptographic process, the cryptographic process comprising deriving a secret value from the temporary public key and the private key and decrypting the ciphertext based at least partly on the secret value to obtain the at least one unmanned aerial vehicle identifier, wherein the at least one unmanned aerial vehicle identifier comprises at least one of an aviation authority unmanned aerial vehicle identifier or a cellular unmanned aerial vehicle identifier, in that the cryptographic process comprises decrypting the ciphertext to further obtain a geo-location of the node and a timestamp, and wherein the means are further configured to perform rejecting the message in case the timestamp is older than a current time by more than a threshold time and as a response to a determination that a current location of the node differs by more than a predefined distance from the geo-location of the node obtained by the decrypting.

According to a third aspect of the present disclosure, there is provided a method comprising controlling an unmanned aerial vehicle, storing, in an apparatus, at least one unmanned aerial vehicle identifier and a public key of a node, providing the at least one unmanned aerial vehicle identifier and the public key to a cryptographic process, the cryptographic process comprising generating a temporary public key, encrypting the at least one unmanned aerial vehicle identifier to obtain a ciphertext and generating a message authentication code based at least in part on the ciphertext and the public key, and transmitting the ciphertext, the message authentication code and the temporary public key in a message to the node, wherein the at least one unmanned aerial vehicle identifier comprises at least one of an aviation authority unmanned aerial vehicle identifier or a cellular unmanned aerial vehicle identifier, the temporary public key is generated in a random or pseudorandom process, the method comprises providing a timestamp to the cryptographic process, and the cryptographic process comprises encrypting the timestamp and a geo-location of the apparatus together with the at least one unmanned aerial vehicle identifier to obtain the ciphertext.

According to a fourth aspect of the present disclosure, there is provided a method, comprising storing, in an apparatus, at least one unmanned aerial vehicle identifier of a node and a private key of the apparatus, receiving, from the node, a message comprising a ciphertext, a message authentication code and a temporary public key, the node being an unmanned aerial vehicle or an apparatus configured to control an unmanned aerial vehicle, and providing the ciphertext and the temporary public key to a cryptographic process, the cryptographic process comprising deriving a secret value from the temporary public key and the private key and decrypting the ciphertext based at least partly on the secret value to obtain the at least one unmanned aerial vehicle identifier, the at least one unmanned aerial vehicle identifier comprises at least one of an aviation authority unmanned aerial vehicle identifier or a cellular unmanned aerial vehicle identifier, the cryptographic process comprises decrypting the ciphertext to further obtain a geo-location of the node and a timestamp, rejecting the message in case the timestamp is older than a current time by more than a threshold time, and rejecting the message responsive to a determination that a current location of the node differs by more than a predefined distance from the geo-location of the node obtained by the decrypting.

According to a fifth aspect of the present disclosure, there is provided a computer program comprising instructions for causing an apparatus to perform at least the following controlling an unmanned aerial vehicle, storing at least one unmanned aerial vehicle identifier and a public key of a node, providing the at least one unmanned aerial vehicle identifier and the public key to a cryptographic process, the cryptographic process comprising generating a temporary public key, encrypting the at least one unmanned aerial vehicle identifier to obtain a ciphertext and generating a message authentication code based at least in part on the ciphertext and the public key, and transmitting the ciphertext, the message authentication code and the temporary public key in a message to the node, wherein the at least one unmanned aerial vehicle identifier comprises at least one of an aviation authority unmanned aerial vehicle identifier or a cellular unmanned aerial vehicle identifier, the temporary public key is generated in a random or pseudorandom process, the computer program is configured to cause the apparatus to provide a timestamp to the cryptographic process, and the cryptographic process comprises encrypting the timestamp and a geo-location of the apparatus together with the at least one unmanned aerial vehicle identifier to obtain the ciphertext.

According to a sixth aspect of the present disclosure, there is provided a computer program comprising instructions for causing an apparatus to perform at least the following: storing at least one unmanned aerial vehicle identifier of a node and a private key of the apparatus, receiving, from the node, a message comprising a ciphertext, a message authentication code and a temporary public key, the node being an unmanned aerial vehicle or an apparatus configured to control an unmanned aerial vehicle, and providing the ciphertext and the temporary public key to a cryptographic process, the cryptographic process comprising deriving a secret value from the temporary public key and the private key and decrypting the ciphertext based at least partly on the secret value to obtain the at least one unmanned aerial vehicle identifier, wherein the at least one unmanned aerial vehicle identifier comprises at least one of an aviation authority unmanned aerial vehicle identifier or a cellular unmanned aerial vehicle identifier, the cryptographic process comprises decrypting the ciphertext to further obtain a geo-location of the node and a timestamp, the computer program is configured to cause the apparatus to reject the message in case the timestamp is older than a current time by more than a threshold time and as a response to a determination that a current location of the node differs by more than a predefined distance from the geo-location of the node obtained by the decrypting.

### BRIEF DESCRIPTION OF THE DRAWINGS

FIGURE 1 illustrates an example system in accordance with at least some embodiments of the present invention;
FIGURE 2 illustrates an example cryptographic process in accordance with at least some embodiments;
FIGURE 3 illustrates an example architecture in accordance with at least some embodiments;
FIGURE 4 illustrates an example apparatus capable of supporting at least some embodiments of the present invention;
FIGURE 5 illustrates signalling in accordance with at least some embodiments of the present invention, and
FIGURE 6 is a flow graph of a method in accordance with at least some embodiments of the present invention.

### EMBODIMENTS

Disclosed herein are security procedures for an unmanned aerial vehicle, UAV, and/or an unmanned aerial vehicle controller, UAVC, use scenarios wherein the UAV/UAVC is enabled to use UAV related functions of a cellular communication system, such as tracking and remote identification, for example. Personally identifiable information, such as UAV identifiers, cellular subscription identifiers and user names are secured using a cryptographic process, which will be described herein. Advantages of the described cryptographic process include defence against man-in-the-middle, MITM, attacks in the context of UAV controlling and communicating in a cellular communication system. Further, benefits are obtained in enhanced security of devices flying in an airspace, and privacy of personal information.

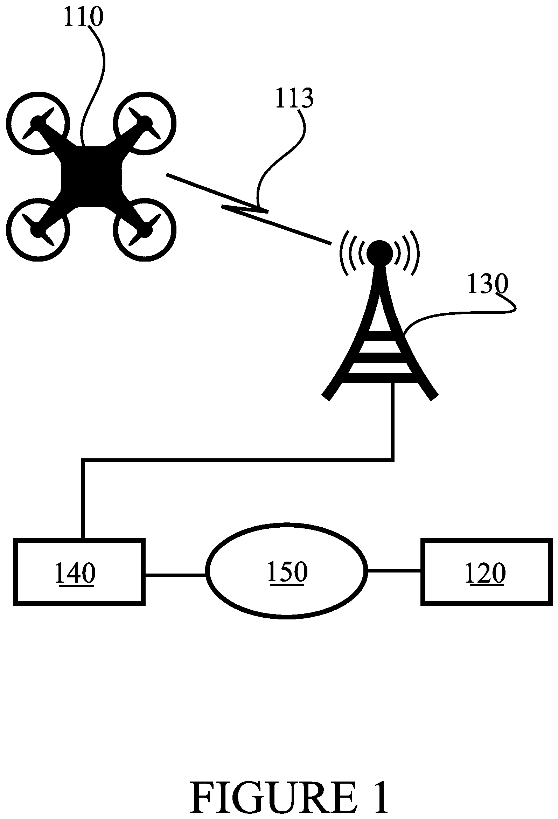

FIGURE 1 illustrates an example system in accordance with at least some embodiments of the present invention. The system comprises an UAV 110, and an UAVC 120. UAVC 120 is configured to control the functioning of UAV 110, for example, UAVC 120 may assign UAV 110 waypoints for navigation and define traffic priorities. In some embodiments, UAVC 120 may control the movements of UAV 110 in real time over a low latency two-way communication connection between UAV 110 and UAVC 120. The UAV 110 and UAVC 120 together form an unmanned aerial system, UAS. A mechanism to control the activities of plural UAS is an UAS traffic management, UTM, function.

A 3^{rd}-generation partnership project, 3GPP, cellular system may be configured to enable the UAS traffic management, UTM, to associate UAV 110 with UAVC 120, and to identify them in both a cellular networked UAV controller and a non-cellular networked UAV controller case. The UAS traffic management, UTM, module has a set of functions and services for managing a range of autonomous vehicle operations, such as authenticating UAV, authorizing UAS services, managing UAS policies, and controlling UAV traffic in the airspace. Service enabler architecture layer for verticals, SEAL, is an architecture used in UAV for vertical application layer, VAL, services retrieved from UTM. SEAL is described in 3GPP document TS 23.434.

The cellular system, which may comprise a 3GPP cellular system, for example, may enable the serving public land mobile network, PLMN, of the UAV(s) and the serving PLMN of the corresponding UAVC to be different. In FIGURE 1, UAVC 110 is in communication with a cellular system comprising a core network 140 and radio-access network 130. While one base station 130 is illustrated in FIGURE 1 for the sake of clarity, in general a radio-access network 130 may comprise multiple base stations 130, even hundreds or thousands of them. A base station 130 may be referred to as a gNB in the case of a 3GPP cellular fifth generation, 5G, cellular system. In other systems the base station may be referred to using a different term, for example in a long term evolution, LTE, cellular system a base station may be referred to as an eNB.

In the system of FIGURE 1, an overall communication path between UAV 110 and UAVC 120 traverses a radio link 113, base station 130, cellular core network 140, and network 150. Cellular core network 140 may be configured to establish one connection leg of unmanned aerial type to UAV 110 and another connection leg of unmanned aerial type to UAVC 120, for example.

The UAS traffic management, UTM, is a set of functionalities defined outside the cellular system and may be subject to requirements which are independent of the cellular communication system, such as regional requirements, for example. Connectivity for command and control of a UAV may be between the UAV and one of: an UAVC, or a 3^{rd}-party authorized entity, TPAE, and the UTM. UAVs not connected through the cellular network are out of scope of the cellular system. Each networked component of a UAS, that is, the UAV and UAVC, may be considered as an individual user equipment, UE, from the perspective of the cellular system. The cellular system may comprise a 3GPP or non-3GPP cellular system, for example. A UAV in an UAS may be replaced by another UAV from another UAS. An UAVC can be removed from a UAS and be replaced with another UAVC or a TPAE.

It is possible for the cellular system to identify if the cellular connectivity service, such as, for example, packet data unit, PDU, session or a packet data network, PDN, connection requested by a UAV or UAVC will be used for a UAV flight operation or not. In other words, the cellular system may know if a connection leg, such as a PDU session or PDN connection, is of the unmanned aerial type. A UAV is assigned, and a networked UAVC may be assigned, a civil aviation authority, CAA, level UAV identifier, ID, by functions in the aviation domain, such as UAS service supplier, USS, or by functions in UTM. Alternatively, an aviation authority UAV identifier may be a military aviation authority UAV identifier. This assigned identity may be used for remote identification and tracking, for example. UAV connectivity, identification and tracking are examples of cellular services provided to support UAV operation. In particular UAVC and UAV identification and tracking in the cellular system are of interest, including how the cellular system can provide support for UAV to ground identification, for example to authorized third parties such as police devices, mechanisms to support UAVC and UAV(s) authorization and authentication by UTM, and mechanisms to handle unauthorized UAVs and revocation of authorization, for example due to lack of connectivity to carry the UAV command and control messages, and denied registration. Such services enable the cellular system to keep track of and control UAV(s).

A cellular UAV ID is used by the cellular system to identify the UAV. General public subscriber identifier, GPSI, may be used as the cellular UAV ID, for example. The UAV may be authenticated at registration with the cellular system using existing UE authentication mechanisms based on cellular network operator credentials. These primary authentication mechanisms may be common, or similar, between UAV UEs and non-UAV UEs of the cellular system.

For networked UAV controllers and non-networked UAV controllers, pairing between the UAV and the UAV controller for the use of UAV3 or UAV5 may be authorized and/or authenticated. Herein UAV3 refers to 3GPP user-plane connectivity for transporting command-and-control, C2, and UAV5 refers likewise to transporting command-and-control in the case a UAV is interfaces with a non-networked UAVC via the Internet. This pairing authorization/authentication, when performed, may be authorized by the USS/UTM, rather than by the cellular system.

An UAV may, overall, be assigned the following identifiers: a cellular subscription permanent identifier, SUPI, which may be known as an IMSI in some embodiments, an aviation authority unmanned aerial vehicle, UAV, identifier, and a cellular unmanned aerial vehicle identifier. Further, the UAV has cellular credentials to perform primary authentication with the cellular communication system. The aviation authority UAV identifier may be a civil aviation authority, CAA, or a military aviation authority, identifier, and may be assigned by USS/UTM, for example. The aviation authority UAV identifier may be used for remote identification and tracking, for example. Cellular core network 140 may be made aware of the aviation authority UAV identifier and maintain a mapping between it and the cellular UAV identifier, in addition to being aware of the cellular subscription permanent identifier of the UAV/UAVC.

To support unmanned aerial systems, UAS, regarding services such as connectivity, identification and tracking, the cellular system should be aware of these UAV identities and therefore also the special nature of a drone, that is, a potentially high and fast flying object. Further, the cellular system should know whether UAV or UAVC roles are authorized for these UEs in the drone domain. For example, after UAV and/or UAVC have been successfully authenticated and authorized, information from the UTM/USS/AF (AF, application function) may be provided to the cellular system providing connectivity. Where the cellular system is a 3GPP system, the awareness of the UAV identities may be maintained in an access and mobility management function, AMF, the base station(s) 130 and/or a unified data management node, UDM.

Knowledge of the UAV identities facilitates application of cellular system policies and software updating to UAVs, among other benefits. The UAV may use the cellular UAV ID to access cellular system services, such as remote identification or determining a geographical location of the UAV. Authorization/authentication mechanisms may be used to prevent unauthorized access to UAS services provided by the cellular system, as such accesses would waste system resources and possibly cause safety hazards. Revocation of UAV authorization may be made possible for the UTM/USS.

UAV identities, such as the aviation authority UAV ID and the cellular UAV ID, are sensitive information which should not be disclosed to unauthorized parties. In case an attacker is able to seize control of an UAV, this attacker might divert the UAV and its cargo to a location of his choosing, enabling theft. A malicious attacker could even direct a UAV to collide with a target, posing danger to persons and property. It is consequently important to prevent unauthorized persons from mounting a MITM attack, or other privacy breaches. In the multi-party arrangement involving the cellular core network 140, the UAVC 120, UTM/USS outside the cellular communication system and possibly TPAEs, the herein disclosed cryptographic process yields particular technical benefit, since the number of potential MITM attack targets is higher than in networks in non-UAV settings.

To secure communications relating to UAVs/UAVCs, nodes participating in such communication may be configured to communicate private information, such as at least one of the UAV identifiers, in a ciphertext generated using a cryptographic process which will be now described. In addition to the identifier(s), the ciphertext may comprise, in encrypted form, also other personal information such one or more of as names, email addresses, mail addresses, social security identifiers, credit card information, UE capability of the UAV controller, position, owner identity, owner contact details, owner certification, UAV operator identity, UAV operator license, UAV operator certification, UAV pilot identity, UAV pilot license, UAV pilot certification and flight plan. If an attacker can glean the UAV and UAVC identities and other information while transmitted, he can maliciously employ the knowledge of UAV and UAV-C identities to mount privacy attacks on the UAV and UAV-C, such as a tracking attack, for example. When the sender of a message is a UAV/UAVC, the at least one of the UAV identifiers may be an identifier(s) of the sender itself. When the sender is another network node, the at least one of the UAV identifiers may be an identifier, or identifiers, of a UAV/UAVC which the sender is configured to support, for example.

A node sending a packet may secure the payload content of the message into the ciphertext by encrypting the contents together with a timestamp as part of a cryptographic process. The timestamp may identify the moment in time, when the encrypting takes place. The encrypting may be performed using a public key of a recipient node of the message, that is, the intended receiver of the message who is to decrypt the ciphertext. The timestamp may be expressed in a suitably selected format, such as a coordinated universal time, UTC, timestamp. The recipient node may be configured to decrypt the ciphertext to retrieve the timestamp and compare a receipt time of the message in the recipient node to the timestamp. In case the timestamp is older than the receipt time by more than a predefined threshold time, the recipient node may reject the message and/or forward it to network operators for analysis.

A lag in the time which exceeds the predefined threshold time may indicate a MITM attack in progress, or that the message is a recorded older message which has been replayed into the network for manipulative reasons. Examples of the predefined threshold time include 20 milliseconds and 45 milliseconds. In some embodiments, the predefined threshold time is approximately twice the estimated round-trip communication delay between the sender and the recipient. The estimated round-trip communication delay may be increased by 5% or 10% to arrive at the predefined threshold time, for example. The recipient node may decrypt the message using its private key. The delay may be dynamically updated by the network based, for example, on delay calculations considering factors including at least one of location of the sender and recipient, size of the message, or an amount of traffic in the network. The delay may be estimated separately for each message. If the time of receipt of the message is stored, the delay may be calculated responsive to receipt of the message as the time of receipt may be subsequently compared to the timestamp. As such, the threshold time may be either predefined or defined responsive to receipt of the message. An advantage of a predefined threshold is that the validity of the timestamp may be confirmed faster than in the case where the threshold time is determined responsive to, that is after, receipt of the message at the recipient.

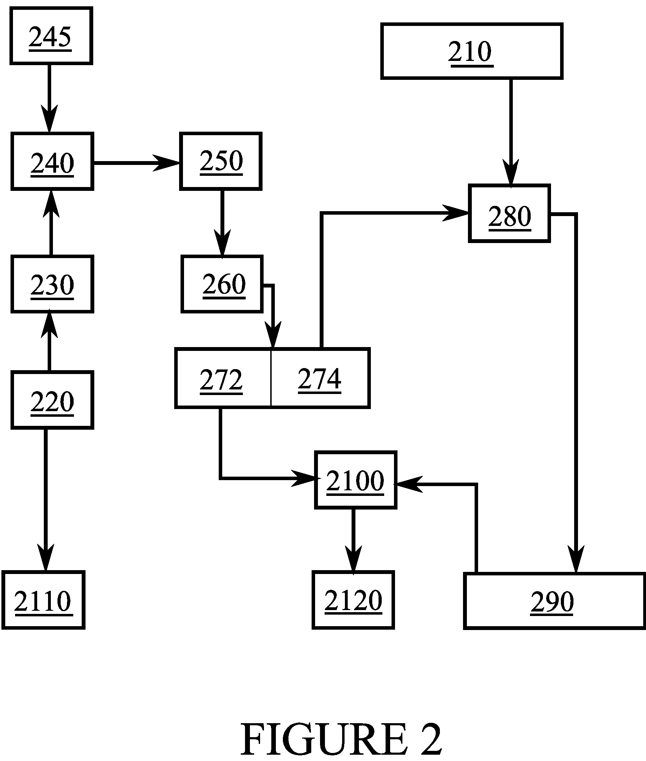

The cryptographic process may further include generating a message authentication code, MAC, and/or a temporary public key, which may be referred to as an ephemeral public key. The MAC may be referred to as a "tag". The temporary public key may be temporary in the sense that it is only used for this single message and a new one is generated every message, or every ten messages, or every fifty messages, for example. The tag may be used to ensure the ciphertext has not been modified during its communication from the sender to the recipient. In case the recipient determines the tag does not match the ciphertext it has received, it may be configured to reject the message and/or forward it to operators for analysis. A tag may be generated using a MAC key and a MAC algorithm. Examples of MAC algorithms include UMAC-VMAC and Poly1305-AES. The temporary public key may be included in the message to enable the sender and recipient to establish a shared secret by an implicit Diffie-Hellman exchange. This process will be discussed in more detail in connection with FIGURE 2. In embodiments which use the temporary public key, the encryption algorithm may be symmetric.

In some embodiments, in addition to the timestamp, the sender is configured to include in the payload content, that is, the information to be encrypted to form the ciphertext, also a geo-location. The geo-location may be a geo-location of a UAV that the UAV ID included in the message identifies. In case the geo-location is sent, the sent geo-location may be cross-checked against approved locations retrieved from a database, for example. For example, an aviation authority may have pre-approved a start location from where the UAV may fly. Geo-location may be provided when the message containing the encrypted UAV ID is sent from UAV towards a TPAE or 3GPP core network 140, or a UTM. Geo-location may be sent for scenarios between UAV-C to UAV as well. Responsive to the geo-location in the message not matching, within a predefined distance, a current location of the node, or the pre-approved start location, the recipient may be configured to reject the message, and/or forward it to operators for analysis.

FIGURE 2 illustrates an example cryptographic process in accordance with at least some embodiments. In the illustrated process, payload content 210 to be encrypted is on the top right. As discussed above, this data may comprise at least one UAV ID, a timestamp and, optionally, a geo-location of UAV or UAVC. A public key of the recipient 245, *g^{v}*, is another input into the cryptographic process. The cryptographic process of FIGURE 2 also includes generation of a random or pseudorandom temporary public key *220, g^{u}.* In particular, 230 *u* may be generated in a random or pseudorandom process. The temporary public key *g^{u}* is also one of the outputs of the cryptographic process, which is denoted by temporary public key output 2110.

The public key of the recipient 245, *g^{v}*, and the randomly generated 230 *u* are provided to a sub-process 240 configured to generate secret value 250, *g^{uv}.* Sub-process 240 may thus comprise exponentiation, for example, raising the public key of the recipient 245 to the power of an exponent, 230 *u,* of the temporary public key 220. The secret value 250, *g^{uv},* may be provided to an optional hash function 260, which may comprise a hash function such as SHA-1 or SHA-2, for example. The output of optional hash function 260 is a bit sequence which comprises a message authentication key, 272 and an encryption key 274. The message authentication key 272 may be referred to as a MAC key 272. For example, these keys may be concatenated or interleaved together in the bit sequence. Where hash function 260 is absent, the secret value 250 may be used as such as keys 272 and 274, or processed in another manner, such as zero padding to arrive at a correct length for the bit sequence 272, 274, and/or XOR'ing with a separate bit sequence. Encryption key 274 is used in encryption algorithm 280 to convert the payload content 210 to ciphertext 290. The elements of the payload data may be concatenated together and provided to encryption algorithm 280 as input, to obtain the ciphertext, for example. Encryption algorithm 280 may be a symmetric algorithm, such as advanced encryption standard, AES, or Blowfish, for example. Symmetric algorithms provide benefits over public-key algorithms in effectiveness in terms of key length and computational efficiency.

MAC key 272 and ciphertext 290 are provided as inputs to MAC algorithm 2100, to generate tag 2120. The outputs of the cryptographic process are then the temporary public key 2110, the tag 2120 and ciphertext 290.

On the recipient side, the recipient is configured to obtain secret value 250, *g^{uv},* from the temporary public key *g^{u}* and the recipient's private key v, which the recipient already has. The MAC key 272 and encryption key 274 may then be generated on the recipient side, to verify the tag against the ciphertext and, in case they match, decrypting the ciphertext 290 to obtain the payload content 210. The recipient may then check the timestamp and, where present, the geo-location in the payload content to verify the message is from a trusted party.

The cryptographic process of FIGURE 2 is a Diffie-Hellman Integrated encryption scheme, DHIES. Being an extension of the ElGamal encryption scheme, DHIES enhances ElGamal: firstly, DHIES provides the capability of encrypting arbitrary bit strings, while ElGamal requires the message be a group element. Secondly, DHIES is secure against chosen-ciphertext attacks while ElGamal is not. Beneficially, these two enhancements are realized without increasing the number of group operations for encryption and decryption, and without increasing key sizes relative to ElGamal. DHIES uses symmetric encryption, message authentication and, optionally, hashing.

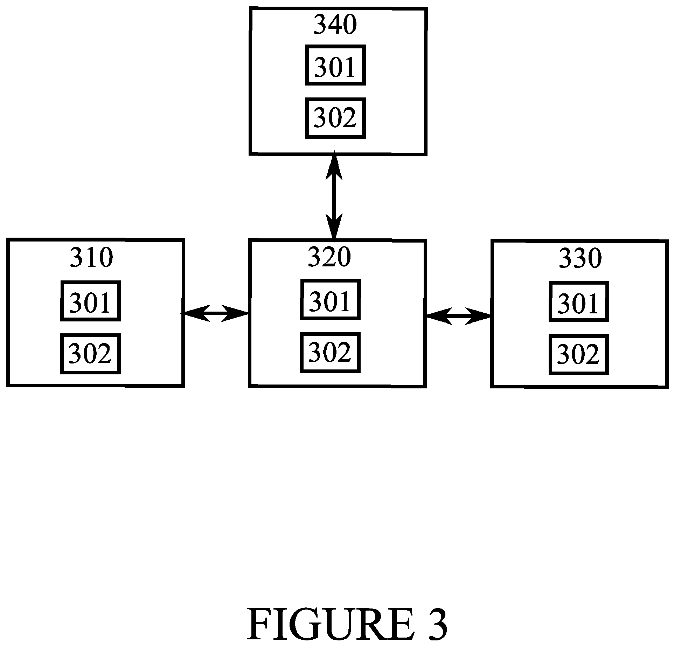

FIGURE 3 illustrates an example architecture in accordance with at least some embodiments. The architecture includes UAV 310, 3GPP core network 320, USS/UTM 330 and TPAE 340. Each of these entities is in this example configured with capability to both associate, 301, and disassociate, 302, an identity with a timestamp. In terms of the messaging described above, associating is performed by the sender of the message and disassociating by the recipient. Thus, a message in accordance with the present disclosure may be exchanged between any two of the entities 310, 320, 330 and 340, that is, each one of them may act as sender and each one of them may act as recipient, as needed.

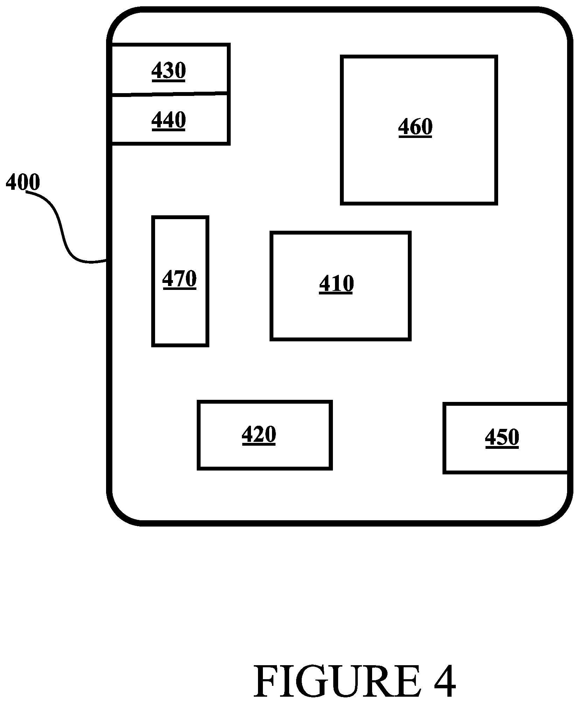

FIGURE 4 illustrates an example apparatus capable of supporting at least some embodiments of the present invention. Illustrated is device 400, which may comprise, for example, a UAV 110, UAVC 120 or, in applicable parts, a USS, UTM or TPAE of FIGURE 3. Comprised in device 400 is processor 410, which may comprise, for example, a single- or multi-core processor wherein a single-core processor comprises one processing core and a multi-core processor comprises more than one processing core. Processor 410 may comprise, in general, a control device. Processor 410 may comprise more than one processor. Processor 410 may be a control device. A processing core may comprise, for example, a Cortex-A8 processing core manufactured by ARM Holdings or a Steamroller processing core designed by Advanced Micro Devices Corporation. Processor 410 may comprise at least one Qualcomm Snapdragon and/or Intel Xeon processor. Processor 410 may comprise at least one application-specific integrated circuit, ASIC. Processor 410 may comprise at least one field-programmable gate array, FPGA. Processor 410 may be means for performing method steps in device 400, such as, for example, storing, transmitting, providing, rejecting and/or receiving. Processor 410 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analogue and/or digital circuitry, and (b) combinations of hardware circuits and software, such as, as applicable: (i) a combination of analogue and/or digital hardware circuit(s) with software/firmware and (ii) any portions of hardware processor(s) with software (including digital signal processor(s)), software, and memory(ies) that work together to cause an apparatus, such as UAV, UAVC or UDM, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 400 may comprise memory 420. Memory 420 may comprise random-access memory and/or permanent memory. Memory 420 may comprise at least one RAM chip. Memory 420 may comprise solid-state, magnetic, optical and/or holographic memory, for example. Memory 420 may be at least in part accessible to processor 410. Memory 420 may be at least in part comprised in processor 410. Memory 420 may be means for storing information. Memory 420 may comprise computer instructions that processor 410 is configured to execute. When computer instructions configured to cause processor 410 to perform certain actions are stored in memory 420, and device 400 overall is configured to run under the direction of processor 410 using computer instructions from memory 420, processor 410 and/or its at least one processing core may be considered to be configured to perform said certain actions. Memory 420 may be at least in part comprised in processor 410. Memory 420 may be at least in part external to device 400 but accessible to device 400.

Device 400 may comprise a transmitter 430. Device 400 may comprise a receiver 440. Transmitter 430 and receiver 440 may be configured to transmit and receive, respectively, information in accordance with at least one cellular or non-cellular standard. Transmitter 430 may comprise more than one transmitter. Receiver 440 may comprise more than one receiver. Transmitter 430 and/or receiver 440 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 400 may comprise a near-field communication, NFC, transceiver 450. NFC transceiver 450 may support at least one NFC technology, such as NFC, Bluetooth, Wibree or similar technologies.

Device 400 may comprise user interface, UI, 460. UI 460 may comprise at least one of a display, a keyboard, a touchscreen, a vibrator arranged to signal to a user by causing device 400 to vibrate, a speaker or a microphone. A user may be able to operate device 400 via UI 460, for example to configure UAV identities and/or to direct the UAV to proceed to a certain location.

Device 400 may comprise or be arranged to accept a user identity module 470. User identity module 470 may comprise, for example, a subscriber identity module, SIM, card installable in device 400. A user identity module 470 may comprise information identifying a subscription of a user of device 400. A user identity module 470 may comprise cryptographic information usable to verify the identity of a user of device 400 and/or to facilitate encryption of communicated information and billing of the user of device 400 for communication effected via device 400.

Processor 410 may be furnished with a transmitter arranged to output information from processor 410, via electrical leads internal to device 400, to other devices comprised in device 400. Such a transmitter may comprise a serial bus transmitter arranged to, for example, output information via at least one electrical lead to memory 420 for storage therein. Alternatively to a serial bus, the transmitter may comprise a parallel bus transmitter. Likewise processor 410 may comprise a receiver arranged to receive information in processor 410, via electrical leads internal to device 400, from other devices comprised in device 400. Such a receiver may comprise a serial bus receiver arranged to, for example, receive information via at least one electrical lead from receiver 440 for processing in processor 410. Alternatively to a serial bus, the receiver may comprise a parallel bus receiver.

Device 400 may comprise further devices not illustrated in FIGURE 4. For example, where device 400 comprises a drone, it may comprise at least one electric motor. Some devices 400 may comprise at least one camera, wherein the at least one camera may be intended to facilitate controlling a drone remotely. Device 400 may comprise a fingerprint sensor arranged to authenticate, at least in part, a user of device 400. In some embodiments, device 400 lacks at least one device described above. For example, some devices 400 may lack a NFC transceiver 450 and/or user identity module 470.

Processor 410, memory 420, transmitter 430, receiver 440, NFC transceiver 450, UI 460 and/or user identity module 470 may be interconnected by electrical leads internal to device 400 in a multitude of different ways. For example, each of the aforementioned devices may be separately connected to a master bus internal to device 400, to allow for the devices to exchange information. However, as the skilled person will appreciate, this is only one example and depending on the embodiment various ways of interconnecting at least two of the aforementioned devices may be selected without departing from the scope of the present invention.

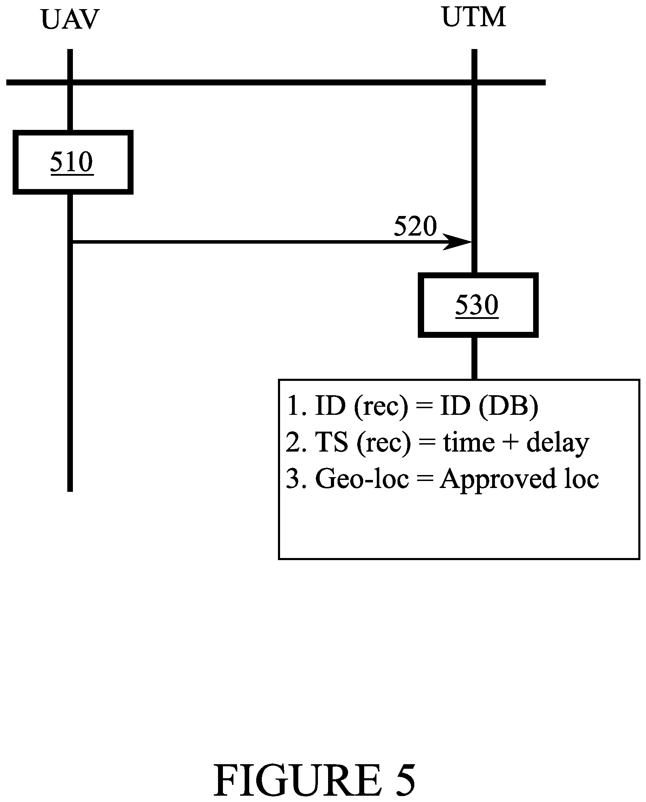

FIGURE 5 illustrates signalling in accordance with at least some embodiments of the present invention. On the vertical axes are disposed, on the left, a UAV, and on the right, a UTM. Time advances from the top toward the bottom.

In phase 510, the UAV associates the UAV identifier(s) with a timestamp indicating the time when the association takes place, and, optionally, the geo-location of the UAV at the time indicated by the timestamp. As described above, the associating may comprise concatenating these data elements together and encrypting them into a ciphertext in a cryptographic process. The UAV may determine its geo-location using satellite positioning and/or cellular positioning, for example. The associating may comprise using the cryptographic process described herein above, to derive a ciphertext of the payload content. In phase 520, the message comprising the ciphertext, the tag and the temporary public key is communicated to the UTM.

In phase 530, the UTM disassociates the identifier(s) and the timestamp, and the geo-location in case that was present in the ciphertext. Checks are performed to determine the received UAV identifier, ID (rec), is a valid identifier, the received timestamp, TS, does not deviate by more than the threshold time from the time of receipt of the message at the UTM, and the geo-location is checked, where present, to verify it corresponds to an approved, or recent, location of the UAV.

In some embodiments, the UAV may include in the payload data, and thus in the ciphertext, a velocity vector of the UAV at the moment of the associating, for example, to facilitate a further check to verify the state of motion of the UAV is consistent with a recent state of motion and/or a flight plan and the timestamp. In case the payload content of the message passes the checks, the message may be accepted as genuine.

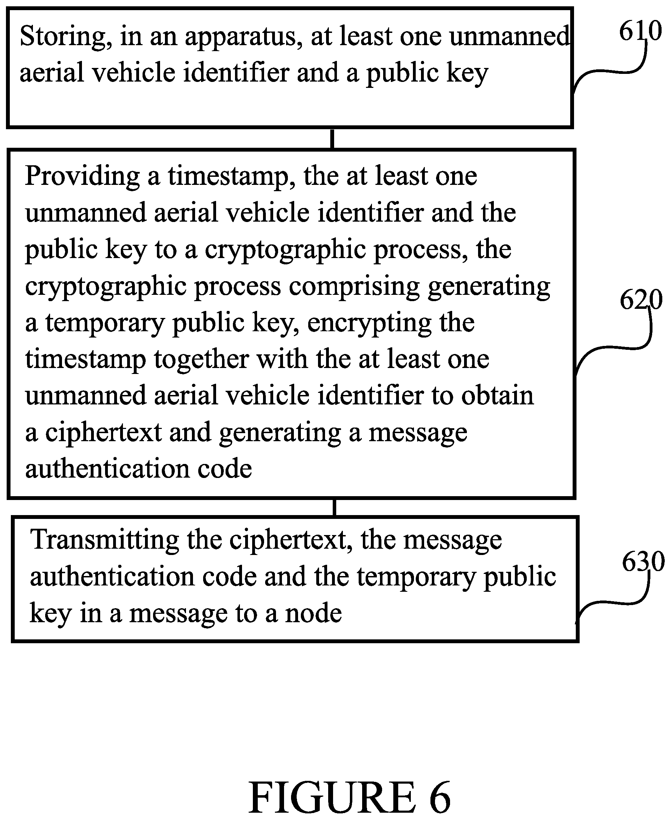

FIGURE 6 is a flow graph of a method in accordance with at least some embodiments of the present invention. The phases of the illustrated method may be performed in a device performing the associating function, that it, a device sending a message.

Phase 610 comprises storing, in an apparatus, at least one unmanned aerial vehicle identifier and a public key. Phase 620 comprises providing a timestamp, the at least one unmanned aerial vehicle identifier and the public key to a cryptographic process, the cryptographic process comprising generating a temporary public key, encrypting the timestamp together with the at least one unmanned aerial vehicle identifier to obtain a ciphertext and generating a message authentication code based at least in part on the ciphertext and the public key. Finally, phase 620 comprises transmitting the ciphertext, the message authentication code and the temporary public key in a message to a node.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

The expression "at least one of A or B" in this document means A, or B, or both A and B.

### INDUSTRIAL APPLICABILITY

At least some embodiments of the present invention find industrial application in managing communication networks to handle UAV-type user equipments.

### ACRONYMS LIST

- AMF: access and mobility management function
- AUSF: authentication server function
- CAA: civil aviation authority
- DHIES: diffie-hellman Integrated encryption scheme
- SEAF: security anchor function
- SUCI: subscription concealed identifier
- SUPI: subscription permanent identifier
- TPAE: 3^{rd} party authorized entity
- UAV: unmanned aerial vehicle
- UAVC: unmanned aerial vehicle controller
- UAS: unmanned aerial system (one UAV and one UAVC)
- UDM: unified data management
- USS: UAS service supplier
- UTM: UAS traffic management

**REFERENCE SIGNS LIST**

| | |
|---|---|
| 110, 310 | UAV |
| 120 | UAVC |
| 130 | base station |
| 140, 320 | cellular core network |
| 150 | Network |
| 113 | Radio link |
| 210 - 2120 | Phases of the cryptographic process of FIGURE 2 |
| 301 | Associating function |
| 302 | Dissociating function |
| 330 | USS/UTM |
| 340 | TPEA |
| 410 - 470 | Structure of device 400 of FIGURE 4 |
| 510 - 530 | Phases of the method of FIGURE 5 |
| 610 - 630 | Phases of the method of FIGURE 6 |

## Claims

1. An apparatus (400, 110, 120) comprising means for performing:
- controlling an unmanned aerial vehicle (110);
- storing (610) at least one unmanned aerial vehicle identifier and a public key of a node (140);
- providing (620) the at least one unmanned aerial vehicle identifier and the public key to a cryptographic process, the cryptographic process comprising generating a temporary public key, encrypting the at least one unmanned aerial vehicle identifier to obtain a ciphertext and generating a message authentication code based at least in part on the ciphertext and the public key; and
- transmitting (630) the ciphertext, the message authentication code and the temporary public key in a message to the node (140);
- the at least one unmanned aerial vehicle identifier comprises at least one of an aviation authority unmanned aerial vehicle identifier or a cellular unmanned aerial vehicle identifier, and the means are further configured to perform:
▪ generating the temporary public key in a random or pseudorandom process; and
▪ providing a timestamp to the cryptographic process which comprises encrypting the timestamp and a geo-location of the apparatus together with the at least one unmanned aerial vehicle identifier to obtain the ciphertext.

2. The apparatus (400, 110, 120) according to claim 1, wherein the means are further configured to perform:
- obtaining a message authentication key and an encryption key from a value derived from the public key and the temporary public key;
- obtaining the ciphertext using the encryption key with the at least one unmanned aerial vehicle identifier and the timestamp in an encryption algorithm; and
- obtaining the message authentication code using the message authentication key with the ciphertext in a message authentication code algorithm.

3. The apparatus (400, 110, 120) according to claim 2, wherein the means are further configured to perform: obtaining the message authentication key and the encryption key from the value using a hash algorithm.

4. The apparatus (400, 110, 120) according to any of claims 1 - 3, wherein the means are further configured to perform: generating the ciphertext using a symmetric encryption algorithm.

5. The apparatus (400, 110, 120) according to any of claims 1 - 4, wherein the cryptographic process comprises a diffie-hellman integrated encryption scheme.

6. The apparatus of any preceding claim wherein the means comprises at least one processor (410); and at least one memory (420) including computer program code, the at least one memory (420) and computer program code configured to, with the at least one processor (410), control the apparatus (400).

7. An apparatus (400, 140) comprising means for performing:
- storing at least one unmanned aerial vehicle identifier of a node (110, 120) and a private key;
- receiving, from the node (110, 120), a message comprising a ciphertext, a message authentication code and a temporary public key, the node (110, 120) being an unmanned aerial vehicle or an apparatus configured to control an unmanned aerial vehicle; and
- providing the ciphertext and the temporary public key to a cryptographic process, the cryptographic process comprising deriving a secret value from the temporary public key and the private key and decrypting the ciphertext based at least partly on the secret value to obtain the at least one unmanned aerial vehicle identifier;
- the at least one unmanned aerial vehicle identifier comprises at least one of an aviation authority unmanned aerial vehicle identifier or a cellular unmanned aerial vehicle identifier, the cryptographic process comprises decrypting the ciphertext to further obtain a geo-location of the node and a timestamp, and the means are further configured to perform: rejecting the message in case the timestamp is older than a current time by more than a threshold time and as a response to a determination that a current location of the node differs by more than a predefined distance from the geo-location of the node obtained by the decrypting.

8. The apparatus (400, 140) according to claim 7, wherein the means are further configured to perform:
- obtaining a message authentication key and an encryption key from the secret value;
- decrypting the ciphertext using the encryption key; and
- employing the message authentication code using the message authentication key with the ciphertext in a message authentication code algorithm.

9. The apparatus (400, 140) according to claim 8, wherein the means are further configured to perform: obtaining the message authentication key and the encryption key from the secret value using a hash algorithm.

10. The apparatus (400, 140) according to any of claims 7 - 9, wherein the means are further configured to perform: decrypting the ciphertext using a symmetric encryption algorithm.

11. The apparatus of any of claims 7 - 10, wherein the means comprises at least one processor (410); and at least one memory (420) including computer program code, the at least one memory (420) and computer program code configured to, with the at least one processor (410), control the apparatus (400).

12. A method comprising:
- controlling an unmanned aerial vehicle;
- storing (610), in an apparatus (400, 110, 120), at least one unmanned aerial vehicle identifier and a public key of a node;
- providing (620) the at least one unmanned aerial vehicle identifier and the public key to a cryptographic process, the cryptographic process comprising generating a temporary public key, encrypting the at least one unmanned aerial vehicle identifier to obtain a ciphertext and generating a message authentication code based at least in part on the ciphertext and the public key; and
- transmitting (630) the ciphertext, the message authentication code and the temporary public key in a message to the node (140);
- the at least one unmanned aerial vehicle identifier comprises at least one of an aviation authority unmanned aerial vehicle identifier or a cellular unmanned aerial vehicle identifier, the temporary public key is generated in a random or pseudorandom process, the method comprises providing a timestamp to the cryptographic process, and the cryptographic process comprises encrypting the timestamp and a geo-location of the apparatus together with the at least one unmanned aerial vehicle identifier to obtain the ciphertext.

13. A method, comprising:
- storing, in an apparatus (400, 140), at least one unmanned aerial vehicle identifier of a node (110, 120) and a private key of the apparatus (400, 140);
- receiving (520), from the node (110, 120), a message comprising a ciphertext, a message authentication code and a temporary public key, the node (110, 120) being an unmanned aerial vehicle or an apparatus configured to control an unmanned aerial vehicle; and
- providing the ciphertext and the temporary public key to a cryptographic process, the cryptographic process comprising deriving a secret value from the temporary public key and the private key and decrypting the ciphertext based at least partly on the secret value to obtain the at least one unmanned aerial vehicle identifier;
- the at least one unmanned aerial vehicle identifier comprises at least one of an aviation authority unmanned aerial vehicle identifier or a cellular unmanned aerial vehicle identifier, the cryptographic process comprises decrypting the ciphertext to further obtain a geo-location of the node and a timestamp, rejecting (530) the message in case the timestamp is older than a current time by more than a threshold time, and rejecting (530) the message responsive to a determination that a current location of the node differs by more than a predefined distance from the geo-location of the node obtained by the decrypting.

14. A computer program comprising instructions for causing an apparatus to perform at least the following:
- controlling an unmanned aerial vehicle;
- storing (610) at least one unmanned aerial vehicle identifier and a public key of a node (140);
- providing (620) the at least one unmanned aerial vehicle identifier and the public key to a cryptographic process, the cryptographic process comprising generating a temporary public key, encrypting the at least one unmanned aerial vehicle identifier to obtain a ciphertext and generating a message authentication code based at least in part on the ciphertext and the public key; and
- transmitting (630) the ciphertext, the message authentication code and the temporary public key in a message to the node (140);
- the at least one unmanned aerial vehicle identifier comprises at least one of an aviation authority unmanned aerial vehicle identifier or a cellular unmanned aerial vehicle identifier, the temporary public key is generated in a random or pseudorandom process, the computer program is configured to cause the apparatus to provide a timestamp to the cryptographic process, and the cryptographic process comprises encrypting the timestamp and a geo-location of the apparatus together with the at least one unmanned aerial vehicle identifier to obtain the ciphertext.

15. A computer program comprising instructions for causing an apparatus to perform at least the following:
- storing at least one unmanned aerial vehicle identifier of a node (110, 120) and a private key of the apparatus;
- receiving, from the node (110, 120), a message comprising a ciphertext, a message authentication code and a temporary public key, the node being an unmanned aerial vehicle or an apparatus configured to control an unmanned aerial vehicle; and
- providing the ciphertext and the temporary public key to a cryptographic process, the cryptographic process comprising deriving a secret value from the temporary public key and the private key and decrypting the ciphertext based at least partly on the secret value to obtain the at least one unmanned aerial vehicle identifier;
- the at least one unmanned aerial vehicle identifier comprises at least one of an aviation authority unmanned aerial vehicle identifier or a cellular unmanned aerial vehicle identifier, the cryptographic process comprises decrypting the ciphertext to further obtain a geo-location of the node and a timestamp, the computer program is configured to cause the apparatus to reject the message in case the timestamp is older than a current time by more than a threshold time and as a response to a determination that a current location of the node differs by more than a predefined distance from the geo-location of the node obtained by the decrypting.

## Patentansprüche

1. Einrichtung (400, 110, 120), die Mittel für Folgendes umfasst:
- Steuern eines unbemannten Luftfahrzeugs (110);
- Speichern (610) von mindestens einer Kennung eines unbemannten Luftfahrzeugs und eines öffentlichen Schlüssels eines Knotens (140);
- Bereitstellen (620) der mindestens einen Kennung des unbemannten Luftfahrzeugs und des öffentlichen Schlüssels für einen kryptographischen Prozess, wobei der kryptographische Prozess das Erzeugen eines temporären öffentlichen Schlüssels, das Verschlüsseln der mindestens einen Kennung des unbemannten Luftfahrzeugs, um einen Chiffretext zu erhalten, und das Erzeugen eines Nachrichtenauthentifizierungscodes mindestens teilweise auf Basis des Chiffretextes und des öffentlichen Schlüssels umfasst; und
- Übertragen (630) des Chiffretextes, des Nachrichtenauthentifizierungscodes und des temporären öffentlichen Schlüssels in einer Nachricht zum Knoten (140);
- die mindestens eine Kennung des unbemannten Luftfahrzeugs umfasst mindestens eines von einer Kennung eines unbemannten Luftfahrzeugs einer Luftfahrtbehörde oder einer zellularen Kennung eines unbemannten Luftfahrzeugs und die Mittel sind ferner dazu ausgelegt, Folgendes durchzuführen:
▪ Erzeugen des temporären öffentlichen Schlüssels in einem zufälligen oder einem pseudozufälligen Prozess; und
▪ Bereitstellen eines Zeitstempels für den kryptographischen Prozess, der das Verschlüsseln des Zeitstempels und eines Geostandorts der Einrichtung zusammen mit der mindestens einen Kennung des unbemannten Luftfahrzeugs umfasst, um den Chiffretext zu erhalten.

2. Einrichtung (400, 110, 120) nach Anspruch 1, wobei die Mittel ferner dazu ausgelegt sind, Folgendes durchzuführen:
- Erhalten eines Nachrichtenauthentifizierungsschlüssels und eines Verschlüsselungsschlüssels aus einem Wert, der aus dem öffentlichen Schlüssel und dem temporären öffentlichen Schlüssel abgeleitet ist;
- Erhalten des Chiffretextes unter Verwendung des Verschlüsselungsschlüssels mit der mindestens einen Kennung des unbemannten Luftfahrzeugs und dem Zeitstempel in einem Verschlüsselungsalgorithmus; und
- Erhalten des Nachrichtenauthentifizierungscodes unter Verwendung des Nachrichtenauthentifizierungsschlüssels mit dem Chiffretext in einem Nachrichtenauthentifizierungscodealgorithmus.

3. Einrichtung (400, 110, 120) nach Anspruch 2, wobei die Mittel ferner dazu ausgelegt sind, Folgendes durchzuführen: Erhalten des Nachrichtenauthentifizierungsschlüssels und des Verschlüsselungsschlüssels aus dem Wert unter Verwendung eines Hashalgorithmus.

4. Einrichtung (400, 110, 120) nach einem der Ansprüche 1 bis 3, wobei die Mittel ferner dazu ausgelegt sind, Folgendes durchzuführen: Erzeugen des Chiffretextes unter Verwendung eines symmetrischen Verschlüsselungsalgorithmus.

5. Einrichtung (400, 110, 120) nach einem der Ansprüche 1 bis 4, wobei der kryptographische Prozess ein integriertes Diffie-Hellman-Verschlüsselungsschema umfasst.

6. Einrichtung nach einem der vorhergehenden Ansprüche, wobei die Mittel mindestens einen Prozessor (410); und mindestens einen Speicher (420) umfasst, der einen Computerprogrammcode beinhaltet, wobei der mindestens eine Speicher (420) und der Computerprogrammcode dazu ausgelegt sind, die Einrichtung (400) mit dem mindestens einen Prozessor (410) zu steuern.

7. Einrichtung (400, 140), die Mittel zum Durchführen von Folgendem umfasst:
- Speichern von mindestens einer Kennung eines unbemannten Luftfahrzeugs eines Knotens (110, 120) und eines privaten Schlüssels;
- Empfangen einer Nachricht, die einen Chiffretext, einen Nachrichtenauthentifizierungscode und einen temporären öffentlichen Schlüssel umfasst, vom Knoten (110, 120), wobei der Knoten (110, 120) ein unbemanntes Luftfahrzeug oder eine Einrichtung ist, die dazu ausgelegt ist, ein unbemanntes Luftfahrzeug zu steuern; und
- Bereitstellen des Chiffretextes und des temporären öffentlichen Schlüssels für einen kryptographischen Prozess, wobei der kryptographische Prozess das Ableiten eines geheimen Wertes aus dem temporären öffentlichen Schlüssel und dem privaten Schlüssel und das Entschlüsseln des Chiffretextes mindestens teilweise auf Basis des geheimen Wertes umfasst, um die mindestens eine Kennung des unbemannten Luftfahrzeugs zu erhalten;
- die mindestens eine Kennung des unbemannten Luftfahrzeugs umfasst mindestens eines von einer Kennung eines unbemannten Luftfahrzeugs einer Luftfahrtbehörde oder einer zellularen Kennung eines unbemannten Luftfahrzeugs, der kryptographische Prozess umfasst das Entschlüsseln des Chiffretextes, um ferner einen Geostandort des Knotens und einen Zeitstempel zu erhalten, und die Mittel sind ferner dazu ausgelegt, Folgendes durchzuführen: Zurückweisen der Nachricht in einem Fall, in dem der Zeitstempel um mehr als eine Schwellwertzeit älter ist als eine aktuelle Zeit, und als eine Reaktion auf eine Bestimmung, dass sich ein aktueller Standort des Knotens um mehr als einen vorbestimmten Abstand vom Geostandort des Knotens, der durch das Entschlüsseln erhalten wird, unterscheidet.

8. Einrichtung (400, 140) nach Anspruch 7, wobei die Mittel ferner dazu ausgelegt sind, Folgendes durchzuführen:
- Erhalten eines Nachrichtenauthentifizierungsschlüssels und eines Verschlüsselungsschlüssels aus einem geheimen Wert;
- Entschlüsseln des Chiffretextes unter Verwendung des Verschlüsselungsschlüssels; und
- Einsetzen des Nachrichtenauthentifizierungscodes unter Verwendung des Nachrichtenauthentifizierungsschlüssels mit dem Chiffretext in einem Nachrichtenauthentifizierungscodealgorithmus.

9. Einrichtung (400, 140) nach Anspruch 8, wobei die Mittel ferner dazu ausgelegt sind, Folgendes durchzuführen: Erhalten des Nachrichtenauthentifizierungsschlüssels und des Verschlüsselungsschlüssels aus dem geheimen Wert unter Verwendung eines Hashalgorithmus.

10. Einrichtung (400, 140) nach einem der Ansprüche 7 bis 9, wobei die Mittel ferner dazu ausgelegt sind, Folgendes durchzuführen: Entschlüsseln des Chiffretextes unter Verwendung eines symmetrischen Verschlüsselungsalgorithmus.

11. Einrichtung nach einem der Ansprüche 7 bis 10, wobei die Mittel mindestens einen Prozessor (410); und mindestens einen Speicher (420) umfasst, der einen Computerprogrammcode beinhaltet, wobei der mindestens eine Speicher (420) und der Computerprogrammcode dazu ausgelegt sind, die Einrichtung (400) mit dem mindestens einen Prozessor (410) zu steuern.

12. Verfahren, das Folgendes umfasst:
- Steuern eines unbemannten Luftfahrzeugs;
- Speichern (610) von mindestens einer Kennung eines unbemannten Luftfahrzeugs und eines öffentlichen Schlüssels eines Knotens in einer Einrichtung (400, 110, 120);;
- Bereitstellen (620) der mindestens einen Kennung des unbemannten Luftfahrzeugs und des öffentlichen Schlüssels für einen kryptographischen Prozess, wobei der kryptographische Prozess das Erzeugen eines temporären öffentlichen Schlüssels, das Verschlüsseln der mindestens einen Kennung des unbemannten Luftfahrzeugs, um einen Chiffretext zu erhalten, und das Erzeugen eines Nachrichtenauthentifizierungscodes mindestens teilweise auf Basis des Chiffretextes und des öffentlichen Schlüssels umfasst; und
- Übertragen (630) des Chiffretextes, des Nachrichtenauthentifizierungscodes und des temporären öffentlichen Schlüssels in einer Nachricht zum Knoten (140);
- die mindestens eine Kennung eines unbemannten Luftfahrzeugs umfasst mindestens eines von einer Kennung eines unbemannten Luftfahrzeugs einer Luftfahrtbehörde oder einer zellularen Kennung eines unbemannten Luftfahrzeugs, der temporäre öffentliche Schlüssel wird in einem zufälligen oder einem pseudozufälligen Prozess erzeugt, das Verfahren umfasst das Bereitstellen eines Zeitstempels für den kryptographischen Prozess und der kryptographische Prozess umfasst das Verschlüsseln des Zeitstempels und eines Geostandorts der Einrichtung zusammen mit der mindestens einen Kennung des unbemannten Luftfahrzeugs, um den Chiffretext zu erhalten.

13. Verfahren, das Folgendes umfasst:
- Speichern von mindestens einer Kennung eines unbemannten Luftfahrzeugs eines Knotens (110, 120) und eines privaten Schlüssels einer Einrichtung (400, 140) in der Einrichtung (400, 140);
- Empfangen (520) einer Nachricht, die einen Chiffretext, einen Nachrichtenauthentifizierungscode und einen temporären öffentlichen Schlüssel umfasst, vom Knoten (110, 120), wobei der Knoten (110, 120) ein unbemanntes Luftfahrzeug oder eine Einrichtung ist, die dazu ausgelegt ist, ein unbemanntes Luftfahrzeug zu steuern; und
- Bereitstellen des Chiffretextes und des temporären öffentlichen Schlüssels für einen kryptographischen Prozess, wobei der kryptographische Prozess das Ableiten eines geheimen Wertes aus dem temporären öffentlichen Schlüssel und dem privaten Schlüssel und das Entschlüsseln des Chiffretextes mindestens teilweise auf Basis des geheimen Wertes umfasst, um die mindestens eine Kennung des unbemannten Luftfahrzeugs zu erhalten;
- die mindestens eine Kennung des unbemannten Luftfahrzeugs umfasst mindestens eines von einer Kennung eines unbemannten Luftfahrzeugs einer Luftfahrtbehörde oder einer zellularen Kennung eines unbemannten Luftfahrzeugs, der kryptographische Prozess umfasst das Entschlüsseln des Chiffretextes, um ferner einen Geostandort des Knotens und einen Zeitstempel zu erhalten, das Zurückweisen (530) der Nachricht in einem Fall, in dem der Zeitstempel um mehr als eine Schwellwertzeit älter ist als eine aktuelle Zeit, und das Zurückweisen (530) der Nachricht in Reaktion auf eine Bestimmung, dass sich ein aktueller Standort des Knotens um mehr als einen vorbestimmten Abstand vom Geostandort des Knotens, der durch das Entschlüsseln erhalten wird, unterscheidet.

14. Computerprogramm, das Anweisungen zum Veranlassen einer Einrichtung, mindestens Folgendes durchzuführen, umfasst:
- Steuern eines unbemannten Luftfahrzeugs;
- Speichern (610) von mindestens einer Kennung eines unbemannten Luftfahrzeugs und eines öffentlichen Schlüssels eines Knotens (140);
- Bereitstellen (620) der mindestens einen Kennung des unbemannten Luftfahrzeugs und des öffentlichen Schlüssels für einen kryptographischen Prozess, wobei der kryptographische Prozess das Erzeugen eines temporären öffentlichen Schlüssels, das Verschlüsseln der mindestens einen Kennung des unbemannten Luftfahrzeugs, um einen Chiffretext zu erhalten, und das Erzeugen eines Nachrichtenauthentifizierungscodes mindestens teilweise auf Basis des Chiffretextes und des öffentlichen Schlüssels umfasst; und
- Übertragen (630) des Chiffretextes, des Nachrichtenauthentifizierungscodes und des temporären öffentlichen Schlüssels in einer Nachricht zum Knoten (140);
- die mindestens eine Kennung eines unbemannten Luftfahrzeugs umfasst mindestens eines von einer Kennung eines unbemannten Luftfahrzeugs einer Luftfahrtbehörde oder einer zellularen Kennung eines unbemannten Luftfahrzeugs, der temporäre öffentliche Schlüssel wird in einem zufälligen oder einem pseudozufälligen Prozess erzeugt, das Computerprogramm ist dazu ausgelegt, die Einrichtung zu veranlassen, einen Zeitstempel für den kryptographischen Prozess bereitzustellen, und der kryptographische Prozess umfasst das Verschlüsseln des Zeitstempels und eines Geostandorts der Einrichtung zusammen mit der mindestens einen Kennung des unbemannten Luftfahrzeugs, um den Chiffretext zu erhalten.

15. Computerprogramm, das Anweisungen zum Veranlassen einer Einrichtung, mindestens Folgendes durchzuführen, umfasst:
- Speichern von mindestens einer Kennung eines unbemannten Luftfahrzeugs eines Knotens (110, 120) und eines privaten Schlüssels der Einrichtung;
- Empfangen einer Nachricht, die einen Chiffretext, einen Nachrichtenauthentifizierungscode und einen temporären öffentlichen Schlüssel umfasst, vom Knoten (110, 120), wobei der Knoten ein unbemanntes Luftfahrzeug oder eine Einrichtung ist, die dazu ausgelegt ist, ein unbemanntes Luftfahrzeug zu steuern; und
- Bereitstellen des Chiffretextes und des temporären öffentlichen Schlüssels für einen kryptographischen Prozess, wobei der kryptographische Prozess das Ableiten eines geheimen Wertes aus dem temporären öffentlichen Schlüssel und dem privaten Schlüssel und das Entschlüsseln des Chiffretextes mindestens teilweise auf Basis des geheimen Wertes umfasst, um die mindestens eine Kennung des unbemannten Luftfahrzeugs zu erhalten;
- die mindestens eine Kennung des unbemannten Luftfahrzeugs umfasst mindestens eines von einer Kennung eines unbemannten Luftfahrzeugs einer Luftfahrtbehörde oder einer zellularen Kennung eines unbemannten Luftfahrzeugs, der kryptographische Prozess umfasst das Entschlüsseln des Chiffretextes, um ferner einen Geostandort des Knotens und einen Zeitstempel zu erhalten, das Computerprogramm ist dazu ausgelegt, die Einrichtung zu veranlassen, die Nachricht in einem Fall zurückzuweisen, in dem der Zeitstempel um mehr als eine Schwellwertzeit älter ist als eine aktuelle Zeit, und als eine Reaktion auf eine Bestimmung, dass sich ein aktueller Standort des Knotens um mehr als einen vorbestimmten Abstand vom Geostandort des Knotens, der durch das Entschlüsseln erhalten wird, unterscheidet.

## Revendications

1. Appareil (400, 110, 120) comprenant des moyens pour :
- commander un véhicule aérien sans pilote (110) ;
- stocker (610) au moins un identifiant de véhicule aérien sans pilote et une clé publique d'un nœud (140) ;
- fournir (620) l'au moins un identifiant de véhicule aérien sans pilote et la clé publique à un processus cryptographique, le processus cryptographique comprenant la génération d'une clé publique temporaire, le cryptage de l'au moins un identifiant de véhicule aérien sans pilote pour obtenir un texte chiffré et la génération d'un code d'authentification de message en se basant au moins en partie sur le texte chiffré et la clé publique ; et
- transmettre (630) le texte chiffré, le code d'authentification de message et la clé publique temporaire dans un message au nœud (140) ;
- l'au moins un identifiant de véhicule aérien sans pilote comprend au moins un parmi un identifiant de véhicule aérien sans pilote d'autorité de l'aviation ou un identifiant de véhicule aérien sans pilote cellulaire, et les moyens sont en outre configurés pour :
■ générer la clé publique temporaire dans un processus aléatoire ou pseudo-aléatoire ; et
■ fournir un horodatage au processus cryptographique qui comprend le cryptage de l'horodatage et d'une géolocalisation de l'appareil en même temps que l'au moins un identifiant de véhicule aérien sans pilote pour obtenir le texte chiffré.

2. Appareil (400, 110, 120) selon la revendication 1, dans lequel les moyens sont en outre configurés pour :
- obtenir une clé d'authentification de message et une clé de cryptage à partir d'une valeur dérivée de la clé publique et de la clé publique temporaire ;
- obtenir le texte chiffré en utilisant la clé de cryptage avec l'au moins un identifiant de véhicule aérien sans pilote et l'horodatage dans un algorithme de cryptage ; et
- obtenir le code d'authentification de message en utilisant la clé d'authentification de message avec le texte chiffré dans un algorithme de code d'authentification de message.

3. Appareil (400, 110, 120) selon la revendication 2, dans lequel les moyens sont en outre configurés pour : obtenir la clé d'authentification de message et la clé de cryptage à partir de la valeur en utilisant un algorithme de hachage.

4. Appareil (400, 110, 120) selon l'une des revendications 1 à 3, dans lequel les moyens sont en outre configurés pour : générer le texte chiffré en utilisant un algorithme de cryptage symétrique.

5. Appareil (400, 110, 120) selon l'une des revendications 1 à 4, dans lequel le processus cryptographique comprend un schéma de cryptage intégré *Diffie-Hellman.*

6. Appareil selon l'une des revendications précédentes, dans lequel les moyens comprennent au moins un processeur (410) ; et au moins une mémoire (420) comportant un code de programme informatique, l'au moins une mémoire (420) et le code de programme informatique étant configurés pour, avec l'au moins un processeur (410), commander l'appareil (400).

7. Appareil (400, 140) comprenant des moyens pour :
- stocker au moins un identifiant de véhicule aérien sans pilote d'un nœud (110, 120) et une clé privée ;
- recevoir du nœud (110, 120) un message comprenant un texte chiffré, un code d'authentification de message et une clé publique temporaire, le nœud (110, 120) étant un véhicule aérien sans pilote ou un appareil configuré pour commander un véhicule aérien sans pilote ; et
- fournir le texte chiffré et la clé publique temporaire à un processus cryptographique, le processus cryptographique comprenant la dérivation d'une valeur secrète à partir de la clé publique temporaire et de la clé privée et le décryptage du texte chiffré en se basant au moins en partie sur la valeur secrète pour obtenir l'au moins un identifiant de véhicule aérien sans pilote ;
- l'au moins un identifiant de véhicule aérien sans pilote comprend au moins un parmi un identifiant de véhicule aérien sans pilote d'autorité de l'aviation ou un identifiant de véhicule aérien sans pilote cellulaire, le processus cryptographique comprend le décryptage du texte chiffré pour obtenir en outre une géolocalisation du nœud et un horodatage, et les moyens sont en outre configurés pour : rejeter le message dans le cas où l'horodatage est plus ancien qu'une heure actuelle de plus d'un temps seuil et lorsqu'il est déterminé qu'un emplacement actuel du nœud diffère de plus d'une distance prédéfinie de la géolocalisation du nœud obtenue par le décryptage.

8. Appareil (400, 140) selon la revendication 7, dans lequel les moyens sont en outre configurés pour :
- obtenir une clé d'authentification de message et une clé de cryptage à partir de la valeur secrète ;
- décrypter le texte chiffré en utilisant la clé de cryptage ; et
- utiliser le code d'authentification de message en utilisant la clé d'authentification de message avec le texte chiffré dans un algorithme de code d'authentification de message.

9. Appareil (400, 140) selon la revendication 8, dans lequel les moyens sont en outre configurés pour : obtenir la clé d'authentification de message et la clé de cryptage à partir de la valeur secrète en utilisant un algorithme de hachage.

10. Appareil (400, 140) selon l'une des revendications 7 à 9, dans lequel les moyens sont en outre configurés pour : décrypter le texte chiffré en utilisant un algorithme de cryptage symétrique.

11. Appareil selon l'une des revendications 7 à 10, dans lequel les moyens comprennent au moins un processeur (410) ; et au moins une mémoire (420) comportant un code de programme informatique, l'au moins une mémoire (420) et le code de programme informatique étant configurés pour, avec l'au moins un processeur (410), commander l'appareil (400).

12. Procédé comprenant les étapes suivantes :
- commander un véhicule aérien sans pilote ;
- stocker (610) dans un appareil (400, 110, 120) au moins un identifiant de véhicule aérien sans pilote et une clé publique d'un nœud ;
- fournir (620) l'au moins un identifiant de véhicule aérien sans pilote et la clé publique à un processus cryptographique, le processus cryptographique comprenant la génération d'une clé publique temporaire, le cryptage de l'au moins un identifiant de véhicule aérien sans pilote pour obtenir un texte chiffré et la génération d'un code d'authentification de message en se basant au moins en partie sur le texte chiffré et la clé publique ; et
- transmettre (630) le texte chiffré, le code d'authentification de message et la clé publique temporaire dans un message au nœud (140) ;
- l'au moins un identifiant de véhicule aérien sans pilote comprend au moins un parmi un identifiant de véhicule aérien sans pilote d'autorité de l'aviation ou un identifiant de véhicule aérien sans pilote cellulaire, la clé publique temporaire est générée dans un processus aléatoire ou pseudo-aléatoire, le procédé comprend la fourniture d'un horodatage au processus cryptographique, et le processus cryptographique comprend le cryptage de l'horodatage et d'une géolocalisation de l'appareil en même temps que l'au moins un identifiant de véhicule aérien sans pilote pour obtenir le texte chiffré.

13. Procédé comprenant les étapes suivantes :
- stocker dans un appareil (400, 140) au moins un identifiant de véhicule aérien sans pilote d'un nœud (110, 120) et une clé privée de l'appareil (400, 140) ;
- recevoir (520) du nœud (110, 120) un message comprenant un texte chiffré, un code d'authentification de message et une clé publique temporaire, le nœud (110, 120) étant un véhicule aérien sans pilote ou un appareil configuré pour commander un véhicule aérien sans pilote ; et
- fournir le texte chiffré et la clé publique temporaire à un processus cryptographique, le processus cryptographique comprenant la dérivation d'une valeur secrète à partir de la clé publique temporaire et de la clé privée et le décryptage du texte chiffré en se basant au moins en partie sur la valeur secrète pour obtenir l'au moins un identifiant de véhicule aérien sans pilote ;
- l'au moins un identifiant de véhicule aérien sans pilote comprend au moins un parmi un identifiant de véhicule aérien sans pilote d'autorité de l'aviation ou un identifiant de véhicule aérien sans pilote cellulaire, le processus cryptographique comprend le décryptage du texte chiffré pour obtenir en outre une géolocalisation du nœud et un horodatage, rejeter (530) le message dans le cas où l'horodatage est plus ancien qu'une heure actuelle de plus d'un temps seuil, et rejeter (530) le message lorsqu'il est déterminé qu'un emplacement actuel du nœud diffère de plus d'une distance prédéfinie de la géolocalisation du nœud obtenue par le décryptage.

14. Programme informatique comprenant des instructions pour amener un appareil à réaliser au moins ce qui suit :
- commander un véhicule aérien sans pilote ;
- stocker (610) au moins un identifiant de véhicule aérien sans pilote et une clé publique d'un nœud (140) ;
- fournir (620) l'au moins un identifiant de véhicule aérien sans pilote et la clé publique à un processus cryptographique, le processus cryptographique comprenant la génération d'une clé publique temporaire, le cryptage de l'au moins un identifiant de véhicule aérien sans pilote pour obtenir un texte chiffré et la génération d'un code d'authentification de message en se basant au moins en partie sur le texte chiffré et la clé publique ; et
- transmettre (630) le texte chiffré, le code d'authentification de message et la clé publique temporaire dans un message au nœud (140) ;
- l'au moins un identifiant de véhicule aérien sans pilote comprend au moins un parmi un identifiant de véhicule aérien sans pilote d'autorité de l'aviation ou un identifiant de véhicule aérien sans pilote cellulaire, la clé publique temporaire est générée dans un processus aléatoire ou pseudo-aléatoire, le programme informatique est configuré pour amener l'appareil à fournir un horodatage au processus cryptographique, et le processus cryptographique comprend le cryptage de l'horodatage et d'une géolocalisation de l'appareil en même temps que l'au moins un identifiant de véhicule aérien sans pilote pour obtenir le texte chiffré.

15. Programme informatique comprenant des instructions pour amener un appareil à réaliser au moins ce qui suit :
- stocker au moins un identifiant de véhicule aérien sans pilote d'un nœud (110, 120) et une clé privée de l'appareil ;
- recevoir du nœud (110, 120) un message comprenant un texte chiffré, un code d'authentification de message et une clé publique temporaire, le nœud étant un véhicule aérien sans pilote ou un appareil configuré pour commander un véhicule aérien sans pilote ; et
- fournir le texte chiffré et la clé publique temporaire à un processus cryptographique, le processus cryptographique comprenant la dérivation d'une valeur secrète à partir de la clé publique temporaire et de la clé privée et le décryptage du texte chiffré en se basant au moins en partie sur la valeur secrète pour obtenir l'au moins un identifiant de véhicule aérien sans pilote ;
- l'au moins un identifiant de véhicule aérien sans pilote comprend au moins un parmi un identifiant de véhicule aérien sans pilote d'autorité de l'aviation ou un identifiant de véhicule aérien sans pilote cellulaire, le processus cryptographique comprend le décryptage du texte chiffré pour obtenir en outre une géolocalisation du nœud et un horodatage, le programme informatique est configuré pour amener l'appareil à rejeter le message dans le cas où l'horodatage est plus ancien qu'une heure actuelle de plus d'un temps seuil et lorsqu'il est déterminé qu'un emplacement actuel du nœud diffère de plus d'une distance prédéfinie de la géolocalisation du nœud obtenue par le décryptage.
